(19) **Europäisches Patentamt**
**European Patent Office**
**Office européen des brevets**

(11) **EP 1 846 781 B1**

(12) **EUROPEAN PATENT SPECIFICATION**

(45) Date of publication and mention
of the grant of the patent:
**30.09.2015 Bulletin 2015/40**

(21) Application number: **06709578.6**

(22) Date of filing: **27.01.2006**

(51) Int Cl.:
***G01V 3/30*** (2006.01)

(86) International application number:
**PCT/GB2006/000282**

(87) International publication number:
**WO 2006/082372 (10.08.2006 Gazette 2006/32)**

(54) **OPTIMUM MULTIFREQUENCY ELECTROMAGNETIC SIGNAL FOR SEA BED LOGGING**

OPTIMALES ELEKTROMAGNETISCHES MEHRFREQUENZSIGNAL FÜR DIE UNTERSUCHUNG VON MEERESBÖDEN

SIGNAL ÉLECTROMAGNÉTIQUE À MULTIFRÉQUENCES OPTIMAL POUR LA DIAGRAPHIE DES FONDS MARINS

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.02.2005 GB 0502064**

(43) Date of publication of application:
**24.10.2007 Bulletin 2007/43**

(73) Proprietor: **Electromagnetic Geoservices ASA 7440 Trondheim (NO)**

(72) Inventor: **SCHAUG-PETTERSEN, Tor N-7036 Trondheim (NO)**

(74) Representative: **Copsey, Timothy Graham et al Kilburn & Strode LLP 20 Red Lion Street London WC1R 4PJ (GB)**

(56) References cited:
**EP-A- 0 368 762        EP-B- 1 256 019**
**US-A- 6 108 605        US-A1- 2004 090 234**

**Description**

Many logging processes use electromagnetic signals to transmit or obtain information. One example of this is the use of electromagnetic waves in sea bed logging, a special application of controlled source electromagnetic sounding developed by ElectroMagnetic GeoServices of Norway.

In one application of this process, an electromagnetic wave field response can be used to determine the presence and/or nature of a reservoir containing hydrocarbons or water, as described in European Patent No. 1256019.

In electromagnetic sea bed logging, a number of types of transmitter signal shapes have been employed, including sinusoidal and square wave. Inversion of the logged data and the production of images from logged data can be considerably improved by logging at several different frequencies. However, if sinusoidal signals are used, logging at $x$ frequencies will take $x$ times as long as logging with a single signal type. In order to improve data inversion without substantially increasing logging times, multifrequency signals containing particular desired frequencies can be used.

The present invention relates to an optimised multifrequency electromagnetic signal which substantially improves inversion of logged data, and a method of obtaining such an optimised signal by selecting the parameters controlling the signal generation.

Candidate multifrequency signal types include square waves, which contain all odd multiples of the fundamental frequency. However, for square waves the amplitude of the $n$th harmonic frequency is proportional to $n^{-1}$, whereas the attenuation along a particular path is typically proportional to $n^{1/2}$. The signal/noise ratio at the receiver for higher harmonic frequencies is therefore relatively low, resulting in larvered quality of results from the inversion of logged data.

Alternatively, a periodic sequence of short pulses of antenna current may be used to produce the signal, providing harmonics in the transmitted signal up to approximately 1/pulse width, each harmonic frequency being of equal amplitude. However, the input to the antenna is usually current limited to a particular value, $I_{max}$, resulting in low power in the harmonics of such a signal.

Signal generating parameters required for the production of an electromagnetic signal comprising two or three desired frequencies of high and equal amplitudes, of use within the field of sea bed logging, are known. However, as described above, the degree of attenuation of the signal between transmitter and receiver is frequency dependent, resulting in low signal/noise ratios at the receiver for some parts of the signal. Further, in the examples known, the absolute value of the transmitting antenna current takes values substantially less than $I_{max}$ for a substantial part of the time, with the result that both the total transmitted power and the power converted to the desired set of frequencies is less than what could be obtained from an optimal signal.

In order to improve the signal range and the inversion of logged data it is now proposed that for an optimised signal, the power transmitted at certain desired harmonic frequencies should be such that the amplitude ratios of the desired frequencies are substantially equal when the receiver is at maximum range. It is also desirable to maximise the overall signal/noise ratio at the receiver in order to improve the quality of the logged data at any given range. Therefore, an optimised signal in the context of the present invention, which may be used in the field of sea bed logging, is one for which the amplitude ratios of the desired frequencies are substantially equal at the receiver when the receiver is at maximum range, the total power delivered to the transmitting antenna is maximised, and the proportion of that power which goes into the desired frequencies is maximised.

According to the present invention, there is provided an optimised multifrequency electromagnetic signal transmitted by an antenna, the signal comprising two or more desired harmonic frequencies of optimised amplitude ratios such that substantially equal amplitude ratios of each frequency are received when the receiver is at maximum range, the total power in the desired harmonic frequencies being the maximised proportion of the maximised power deliverable to the transmitting antenna.

Optionally, the present invention may be characterised in that the antenna current takes on the values $\pm I_{max}$ only, to maximise the total power delivered to the transmitting antenna. This results in a longer signal range.

Optionally, the present invention may be further characterised in that the two or more desired frequencies are all harmonics of one frequency, and that the signal is periodic in time with the period of the fundamental, to simplify signal synthesis.

Optionally, the present invention may be further characterised in that when the transmitting antenna is capable of radiating a circularly polarised rotating field the desired harmonic frequencies are all odd harmonics, to ensure that the polarisation of each desired harmonic frequency rotates.

Optionally, the present invention may be further characterised in that the signal comprises three or more desired harmonic frequencies of optimised amplitude ratios.

According to another aspect of the present invention, there is provided a method of producing an optimised multifrequency electromagnetic signal, the method comprising obtaining optimised signal generating parameters using a transmitter-receiver offset length and modelled signal behaviour to determine a set of desired harmonic frequencies optimally suited for logging at a site, and suitable amplitude ratios for the desired harmonic frequencies: and using a transmitter to produce a signal according to the optimised signal generating parameters.

The signal generating parameters may comprise current direction switch times, signal period and number of current direction switch times per period. The parameter values may be obtained by iterative refinement of an initial standard parameter set, by comparison of the signal which would be produced by an antenna operated under those parameters with the ideal optimised signal. The choice of initial standard parameters depends on the nature of the site and required signal and in particular cases different choices may have to be tried before obtaining a covered solution set of parameters.

This method may incorporate a two step process, in which the first step comprises choosing an initial set of switching times and other parameters, perturbing the switching times and then adjusting the switching times iteratively to obtain a trial signal having substantially optimal amplitude ratios of the desired frequencies, and the second step comprises increasing the total signal power to obtain a trial signal having the maximum possible amplitude for the highest desired frequency, within the operating limits of the transmitting system, while maintaining the amplitude ratios of the desired frequencies by adjustment of signal generating parameters.

Optionally, the method of the present invention may further comprise modelling the site to be investigated through sea bed logging using some or all of the known site parameters and combining the information with the transmitter-receiver offset length and modelled signal behaviour to determine a set of desired signal frequencies optimally suited for logging at the site, and ideal amplitude ratios for the desired harmonic frequencies.

The present invention also extends to the use of an optimised or substantially optimised multifrequency electromagnetic signal for the purpose of obtaining data by the method of sea bed logging, in order to determine the presence and/or nature of a reservoir containing hydrocarbons or water.

The present invention also extends to data and results obtained from the use of an optimised multifrequency electromagnetic signal for the method of sea bed logging.

It may be desirable to apply signals with these characteristics, obtained using the optimisation method described, within other fields not related to marine controlled source electromagnetic sounding.

The method for obtaining optimal signal generating parameters is now described, and an example given. The antenna current function $I(t)$ shall have the properties

$$(1.1) \qquad I(t+T) = I(t) \ , \ \left| I(t) \right| = I_{\max} \ , \ I(t) \ \text{real}$$

where $I_{\max}$ is the maximum value of the current. We divide the interval $0 \leq t \leq 2\pi$ into $2N$ parts by the points $t_m$, $m = 1, 2, \ldots, 2N\text{-}1$, and define

$$(1.2) \qquad I(t) = \sum_{m=1}^{2N} I_m(t) \ , \ I_m(t) = \begin{cases} (-1)^{m-1} \cdot I_{\max} \ \text{for} \ t_{m-1} < t < t_m \\ \\ 0 \ \text{else} \end{cases}$$

$$t_0 = 0 \ , \ t_{m+2N} = t_m + T \ , \ t_{m-1} \leq t_m$$

Symmetry considerations show that we may require the $t_m$ to satisfy

$$(1.3) \qquad t_{2N-m} = T - t_m \ , \ m = 1, 2, \ldots, N$$

and still obtain optimum performance. In this case, the signal is fully determined by the first $N$ values of $t_n$, and we have

$$I(t) = \sum_{n=0}^{\infty} i_n \sin nt \ , \ \ i_n = \frac{2}{T} \int_0^T I(t) \cdot \sin nt \cdot dt =$$

$$(1.4) \qquad = I_{\max} \cdot \frac{4}{nT} \left[ \frac{1-(-1)^N}{2} + \sum_{m=1}^{N-1} (-1)^m \cos nt_m \right] \ , \ n > 0 \ , \ i_0 = 0.$$

$$\frac{\partial i_n}{\partial t_m} = (-1)^{m-1} \cdot \frac{4 I_{\max}}{\pi} \cdot \sin nt_m$$

The $i_n$ are all real valued, and we have $\sum_1^{\infty} i_n^2 = 2 I_{\max}^2$. We want a selected set of the $i_n$ to be in prescribed ratios, $i_{n_r} = i_{0n_r}$, $r = 1,2,..., N$, while their absolute values are as large as possible. The $i_0$ may not be arbitrarily chosen, since we must have

$$(1.5) \qquad \sum_{r=1}^{N} i_{n_r}^2 \leq 2 I_{\max}^2$$

We therefore make the transformation

$$(1.6) \qquad i_{0n_k} \to K \cdot i_{0n_k} \ , \ r = 1,2,...,N \ , \ 0 < K < 2$$

where K is to be determined. When the $i_0$ are given, there is a maximum value of K beyond which there is no solution. It may be shown that a solution always exists for a sufficiently small value of $K$.

A suitable starting value of $K$ may be found by trial and error. Next, starting values of $t_n$ are chosen. This choice is more or less arbitrary, and in particular cases, different choices may have to be tried. After calculating the $i_n$, the gradient relation in (1.4) is used to find how the $t_n$ should be changed in order to bring the $in$ closer to their desired values. We solve the equations

$$(1.7) \qquad \sum_{m=1}^{N} \frac{\partial i_{n_r}}{\partial t_m} \cdot \Delta t_m = i_{0n_r} - i_{n_r} \ , \ r = 1,2,...,N$$

for the $\Delta t_m$, and choose new values of $t_m$, setting

$$(1.8) \qquad t_m \to t_m + \alpha \cdot \Delta t_m$$

where the constant $\alpha < 1$ is chosen so as to ensure convergence. This process converges quickly, or it diverges if $K$ and/or $t_n$ are ill chosen. Having found a solution for the chosen value of $K$, we wish to *make K as large as possible*, while keeping the ratios of the harmonics constant. We therefore repeat the process with a larger value of $K$, and continue until divergence. The limiting values of $K$ and $t_m$ determine an optimum signal.

Example. Normalising the $t_m$, $t_m \to t_m/T$, we set

$$i_{01} = 0.118$$

$$i_{02} = 0.259$$

$$i_{04} = 1.000$$

$$K = 1.000$$

$$\alpha = 0.5$$

We choose the initial values

$$t_1 = 0.886$$

$$t_2 = 1.770$$

$$t_4 = 2.656$$

Optimizing the "$t$"s, we get the values

$$t_1 = 1.057$$

$$t_2 = 1.755$$

$$t_4 = 2.446$$

The efficiency, defined as the fraction of the total power that goes into the desired harmonics, is 54 %. Testing for convergence, we find that the maximum value of K is 1.187. For this value, we get

$$t_1 = 0.949$$

$$t_2 = 1.527$$

$$t_4 = 2.276$$

The efficiency is 76 %, and the ratios of the harmonics are

$$i_1/i_4 = 0.1175$$

$$i_2/i_4 = 0.2599$$

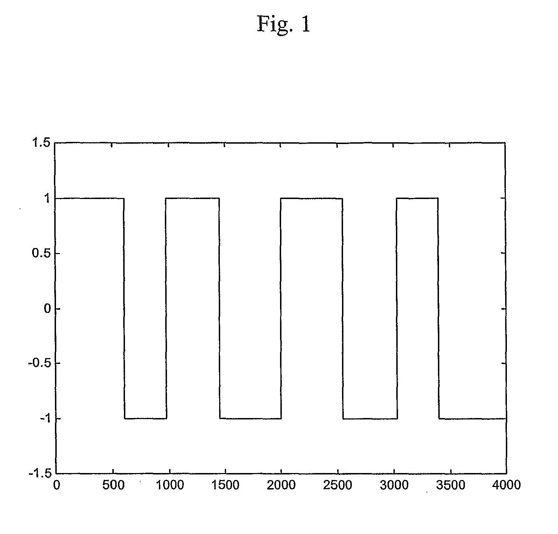

The shape of the optimum signal is shown in Fig. 1.

The optimum values of $t_n$ are not unique. A cyclic permutation of the "$t$"s does not change the shape of the signal, causing only a translation in time, but no change of the powers of the individual harmonics. Also, inversion of the sequence of "$t$"s has no effect on the harmonic powers. In fact, if $S(t)$ is an optimum signal, $\pm S(\pm t + \tau)$ is also an optimum signal for any value of $\tau$.

**Claims**

1. A method of producing an optimised multifrequency electromagnetic signal for sea bed logging, the method comprising the following steps:

   - obtaining optimised signal generating parameters using a transmitter receiver offset length and modelled signal behaviour, where the signal generating parameters are selected from current direction switch times, signal period and a number of current direction switch times per period, and where the parameter values are obtained by iterative refinement of an initial standard parameter set,
   - using the optimised signal generating parameters to determine a set of two or more desired harmonic frequencies optimally suited for logging at a site, and suitable amplitude ratios for the desired harmonic frequencies such that substantially equal amplitude ratios of each frequency are received at a receiver when the receiver is at a maximum range, the total power in the desired harmonic frequencies being a maximised proportion of the maximised power deliverable to a transmitter; and
   - using a transmitter to produce a signal according to the optimised signal generating parameters.

2. The method according to Claim 1, **characterised in that** the method comprises modelling the site to be investigated through sea bed logging using known site parameters and combining the information with the transmitter- receiver offset length and modelled signal behaviour to determine a set of desired signal frequencies optimally suited for logging at a site, and suitable amplitude ratios for the desired harmonic frequencies.

3. A method of obtaining data by sea bed logging according to Claim 1, in order to determine the presence and/or nature of a reservoir containing hydrocarbons or water, which comprises transmitting an optimised multifrequency electromagnetic signal transmitted by an antenna.

4. A method as claimed in Claim 3, **characterised in that** the antenna current takes on values of $\pm I_{max}$ only, to maximise the total power delivered to the transmitting antenna.

5. A method as claimed in Claim 3 or Claim 4, **characterised in that** the two or more desired frequencies are all harmonics of one frequency, and that the signal is periodic in time with the period of the fundamental, to simplify signal synthesis.

6. A method as claimed in any preceding Claim, **characterised in that** when the transmitting antenna is capable of radiating a circularly polarised rotating field the desired harmonic frequencies are all odd harmonics, to ensure that the polarisation of each desired harmonic frequency rotates.

7. A method as claimed in any preceding Claim, **characterised in that** the signal comprises three or more desired harmonic frequencies of optimised amplitude ratios.

**Patentansprüche**

1. Verfahren zum Erzeugen eines optimierten elektromagnetischen Mehrfrequenz-Signals für das Sondieren des Meeresgrunds, wobei das Verfahren die folgenden Schritte umfasst:

   - Erhalten optimierter Parameter für die Signalgenerierung mittels einer Sender-Empfänger-Zeitabstandslänge und eines modellierten Signalverhaltens, wobei die Parameter für die Signalgenerierung aus Umschaltzeiten der Stromrichtung, einer Signalperiode und einer Anzahl von Umschaltzeiten der Stromrichtung pro Periode ausgewählt sind, und wobei die Parameterwerte durch eine schrittweise Einengung eines anfänglichen Standard-Parametersatzes erhalten werden,

- Verwenden der optimierten Parameter zur Signalgenerierung zum Bestimmen eines Satzes von zwei oder mehr gewünschten harmonischen Frequenzen, die optimal für das Sondieren an einem Ort geeignet sind, und geeignete Amplitudenverhältnisse für die gewünschten harmonischen Frequenzen, sodass im Wesentlichen gleiche Amplitudenverhältnisse jeder Frequenz von einem Empfänger empfangen werden, wenn sich der Empfänger in einem Maximalbereich befindet, wobei die Gesamtstärke in den gewünschten harmonischen Frequenzen ein maximierter Anteil der maximierten Stärke ist, die an einen Sender geliefert werden kann; und

- Verwenden eines Senders zum Erzeugen eines Signals gemäß den optimieren Parametern zur Signalgenerierung.

2. Verfahren nach Anspruch 1, **dadurch gekennzeichnet, dass** das Verfahren das Modellieren des mittels Sondieren des Meeresgrunds zu untersuchenden Orts mit bekannten Parametern des Orts umfasst, und das Kombinieren der Informationen mit der Sender-Empfänger-Zeitabstandslänge und dem modellierten Signalverhalten, um einen Satz von gewünschten Signalfrequenzen zu bestimmen, die optimal für das Sondieren an einem Ort geeignet sind, und geeignete Amplitudenverhältnisse für die gewünschten harmonischen Frequenzen.

3. Verfahren zum Erhalten von Daten durch Sondieren des Meeresgrunds nach Anspruch 1, um das Vorhandensein und/oder die Beschaffenheit einer Lagerstätte zu bestimmen, die Kohlenwasserstoffe oder Wasser enthält, umfassend das Senden eines optimierten elektromagnetischen Mehrfrequenz-Signals, das von einer Antenne gesendet wird.

4. Verfahren nach Anspruch 3, **dadurch gekennzeichnet, dass** der Antennenstrom nur Werte von $\pm 1_{max}$ annimmt, um die an die Sendeantenne gelieferte Gesamtstärke zu maximieren.

5. Verfahren nach Anspruch 3 oder Anspruch 4, **dadurch gekennzeichnet, dass** alle der zwei oder mehr gewünschten Frequenzen Harmonische einer Frequenz sind, und dass das Signal mit der Periode der Grundfrequenz zeitlich periodisch ist, um die Signalsynthese zu vereinfachen.

6. Verfahren nach einem der vorhergehenden Ansprüche, **dadurch gekennzeichnet, dass**, wenn die Sendeantenne ein kreisförmig polarisiertes drehendes Feld bestrahlen kann, alle gewünschten harmonischen Frequenzen ungeradzahlige Harmonische sind, um zu gewährleisten, dass sich die Polarisation jeder gewünschten harmonischen Frequenz dreht.

7. Verfahren nach einem der vorhergehenden Ansprüche, **dadurch gekennzeichnet, dass** das Signal drei oder mehr gewünschte harmonische Frequenzen mit optimierten Amplitudenverhältnissen umfasst.

**Revendications**

1. Procédé de production d'un signal électromagnétique multifréquence optimisé pour la diagraphie de fonds marins, le procédé comprenant les étapes suivantes :

- obtention de paramètres de production de signal optimisé en utilisant une longueur de décalage d'émetteur-récepteur et un comportement de signal modélisé, où les paramètres de production de signal sont sélectionnés à partir de temps de commutateur de sens de courant, de période de signal et d'un certain nombre de temps de commutateur de sens de courant par période, et où les valeurs de paramètre sont obtenues par un affinage itératif d'un jeu initial de paramètres standards,

- utilisation des paramètres de production de signal optimisé pour déterminer un jeu de deux ou plusieurs fréquences harmoniques souhaitées appropriées de façon optimale pour la diagraphie au niveau d'un site, et des rapports d'amplitude appropriés pour les fréquences harmoniques souhaitées de sorte que des rapports d'amplitude sensiblement égaux de chaque fréquence sont reçus au niveau d'un récepteur lorsque le récepteur est à une portée maximale, la puissance totale dans les fréquences harmoniques souhaitées étant une proportion maximisée de la puissance maximisée pouvant être délivrée à un émetteur ; et

- utilisation d'un émetteur pour produire un signal selon les paramètres de production de signal optimisé.

2. Procédé selon la revendication 1, **caractérisé en ce que** le procédé comprend la modélisation du site à examiner par diagraphie de fonds marins en utilisant des paramètres de site connus et en combinant les informations avec la longueur de décalage d'émetteur-récepteur et le comportement de signal modélisé pour déterminer un jeu de fréquences de signal souhaitées appropriées de façon optimale pour la diagraphie au niveau d'un site, et des rapports d'amplitude appropriés pour les fréquences harmoniques souhaitées.

3. Procédé d'obtention de données par diagraphie de fonds marins selon la revendication 1, afin de déterminer la présence et/ou la nature d'un réservoir contenant des hydrocarbures ou de l'eau, qui comprend l'émission d'un signal électromagnétique multifréquence optimisé émis par une antenne.

4. Procédé selon la revendication 3, **caractérisé en ce que** le courant d'antenne prend des valeurs de +/-$I_{max}$ seulement, pour maximiser la puissance totale délivrée à l'antenne d'émission.

5. Procédé selon la revendication 3 ou la revendication 4, **caractérisé en ce que** les deux ou plusieurs fréquences souhaitées sont toutes des harmoniques d'une seule fréquence, et **en ce que** le signal est périodique dans le temps avec la période de la fondamentale, pour simplifier la synthèse de signal.

6. Procédé selon n'importe quelle revendication précédente, **caractérisé en ce que** lorsque l'antenne d'émission est susceptible d'émettre un champ rotatif polarisé circulaire, les fréquences harmoniques souhaitées sont toutes des harmoniques impaires, pour assurer que la polarisation de chaque fréquence harmonique souhaitée tourne.

7. Procédé selon n'importe quelle revendication précédente, **caractérisé en ce que** le signal comprend trois fréquences harmoniques souhaitées ou plus de rapports d'amplitude optimisés.

Fig. 1

**EP 1 846 781 B1**

**Patent documents cited in the description**

- EP 1256019 A